# EUROPEAN PATENT APPLICATION

(11) **EP 2 709 022 A1**
(43) Date of publication of application: **19.03.2014**
(21) Application number: 12184530.9
(22) Date of filing: 14.09.2012
(51) Int. Cl.: G06F 17/30

(54) **Method and devices for updating a database of a navigation device**

(71) Applicant: Harman Becker Automotive Systems GmbH, 76307 Karlsbad (DE)
(72) Inventor: Kunath, Peter, 80999 München (DE); Welscher, Jürgen, 85570 Markt Schwaben (DE); Samokhin, Viktor, 81375 München (DE); Prinz, Andreas, 85630 Grasbrunn (DE)
(74) Representative: Meier, Florian

(57) **Abstract**

A difference file (75) which defines a difference between a second relational database (22) and a first relational database (21) is transferred to a navigation device. The navigation device stores a first compressed database version (31) of the first relational database (21). The navigation device (1) restores database pages of the second relational database (22) from the first compressed database version (31) and the difference file (75). The restoring is performed on page level and comprises reading and uncompressing a database page (35, 36) from the first compressed database version; modifying the uncompressed database page (26) in accordance with the difference file (75) to restore a database page of the second relational database (22); and compressing and appending the restored database page (37, 38) of the second relational database to a target database (82).

## Description

### Technical Field

Embodiments of the invention relate to methods and devices for updating a database of a navigation device. Embodiments of the invention relate in particular to a method of updating a database and to devices in which an incremental update is performed which uses a difference file.

### Background

Navigation devices are known which perform functions such as route searches between two locations. Modern navigation devices also may provide additional functionalities, such as serving as a travel guide which outputs, upon demand, information on points of interest (POI). Modern navigation devices also may provide additional driver assist functions, such as Advanced Driver Assist System functions. In order to address the ever increasing demand for databases which reflect recent changes in road networks, a database stored in a navigation device may be subject to an update procedure.

It is generally desired to keep the data transfer volumes moderate which are required for performing an update. To this end, techniques are employed which use "differential" or "delta" updates. In such techniques, it is not required that the full new database be transferred. A "difference file" (also referred to as "delta file") may be transferred and the new database may be computed using the difference file. Another incremental technique may be based on a tiling which subdivides an area into plural tiles, with the update being performed selectively only for certain tiles.

Various approaches may be used to perform database updates by generating a difference file and processing the difference file at the navigation device. For illustration, various databases have an integrated database manager which would allow a difference file to be generated as a sequence of functions performed by the database manager. For illustration, for a database which is a relational database, the relational database management system (RDBMS) may be configured to execute a sequence of insert, update or delete statements. The sequence of such statements may be written into the difference file. This may lead to undesired fragmentation of the resulting database. I.e., there is a risk that data that were originally stored in one storage area because they belong to the same geographical or other context may become separated in the update procedure.

To keep storage space requirements moderate, relational databases may be stored in a compressed format in a navigation device. A database stored in such a compressed format will be referred to as a "first compressed database version", for example. The compression may be performed by the RDBMS. An uncompressed version of the respective database will be referred to as "first relational database", for example, it being understood that reference is made to the uncompressed version of the relational database and its uncompressed database pages. A delta update could be performed directly on the compressed database versions. While such an approach may look attractive in terms of processing times, data transfer volumes may still be fairly large and data transfer times may accordingly be long. Further, if different navigation devices use different compression techniques, different difference files must be computed for the various navigation devices.

### Summary

Accordingly, there is a need for methods and devices which address at least some of the above shortcomings. In particular, there is a need for methods and devices which reduce the risk of fragmentation when performing a delta update. There is also a need for methods and devices which offer advantages in terms of the size of the difference file.

According to embodiments of the invention, a method, a navigation device and an update server as recited in the independent claims are provided. The dependent claims define further embodiments.

According to exemplary embodiments, methods and devices are provided for updating a database of a navigation device. The methods and devices of embodiments use a difference file which defines a difference between a second relational database and a first relational database. I.e., even when the first relational database is stored on the navigation device in a compressed form as a first compressed database version, the difference file is determined as difference between the (uncompressed) first relational database and the (uncompressed) second relational database. For typical navigation databases, this allows a size of the difference file to be reduced compared to cases where the difference file is computed as difference between compresses first and second database versions. Further, one and the same difference file may be used to update databases in different navigation devices, even when the different navigation devices use different compression algorithms for storing compressed database versions.

In the methods and devices of embodiments, the update procedure is page-based. The difference file may include entries which are organized in accordance with database pages. The difference file is applied to database pages of the first relational database, to thereby restore database pages of the second relational database at the navigation device. For such an update procedure which acts directly on the binary information in the database pages, the RDBSM does not need to be invoked to execute insert, update or delete statements. Such an update procedure which is performed on page level and which acts on the binary information in the database file is universal in the sense that it can be applied independently of the internal structure of the database. By performing the update procedure on page level, the update procedure can also be easily interrupted and continued at a later stage. This may be desirable when a vehicle in which the navigation device is installed is in operation for a time period that is shorter than the time period required for completing all steps of the update method which are performed by the navigation device. Drawbacks associated with the overhead time required for reading and uncompressing database pages at the navigation device may be mitigated to a certain degree. The risk of fragmentation is mitigated. The computation of the difference file by a server may also be performed in a page-based manner. For illustration, the difference file may be computed by sequentially reading and, if required, uncompressing database pages of the second, i.e. new, relational database and scanning for repeating byte patterns in the read database pages.

According to an embodiment, a method of updating a database of a navigation device is provided. The method comprises computing, by a server, a difference file which defines a difference between a second relational database and a first relational database. The first and second relational databases respectively may have a plurality of database pages. The difference file is received at the navigation device, which stores a first compressed database version of the first relational database. The navigation device restores database pages of the second relational database from the first compressed database version and the difference file. The restoring is performed on page level and comprises reading and uncompressing a database page from the first compressed database version; modifying the uncompressed database page in accordance with the difference file to restore a database page of the second relational database; and appending the database page of the second relational database to a target database. The restoring may be repeated iteratively for all database pages, until the second relational database or a compressed version thereof is completely restored.

According to another embodiment, a navigation device is provided. The navigation device comprises a storage device which stores a first compressed database version of the first relational database. The first relational database comprises a plurality of database pages. The navigation device comprises an interface configured to receive a difference file which defines a difference between a second relational database and the first relational database. The navigation device comprises a processing device coupled to the storage device and the interface. The processing device is configured to perform a restoring procedure to restore database pages of the second relational database from the first compressed database version and the difference file. The restoring procedure performed by the processing device comprises reading and uncompressing a database page from the first compressed database version; modifying the uncompressed database page in accordance with the difference file to restore a database page of the second relational database; and appending the database page of the second relational database to a target database. The restoring procedure may be repeated iteratively for all database pages, until the second relational database or a compressed version thereof is completely restored.

According to another embodiment, an update server is provided. The update server comprises a storage device which stores a first compressed database version of a first relational database and a second compressed database version of a second relational database, the first and second relational databases respectively having a plurality of database pages. The update server comprises a processing device configured to uncompress the first compressed database version to thereby obtain database pages of the first relational database, to uncompress the second compressed database version to thereby obtain database pages of the second relational database, and to compute a difference file which defines a difference between database pages of the second relational database and database pages of the first relational database. The update server comprises an interface to output the difference file for transferring the difference file to the navigation device.

According to another embodiment, a system is provided which comprises the navigation device and the update server.

It is to be understood that the features mentioned above and those to be explained below can be used not only in the respective combinations indicated, but also in other combinations or in isolation.

### Brief description of the drawings

The foregoing and other features of embodiments will become more apparent from the following detailed description of embodiments when read in conjunction with the accompanying drawings. In the drawings, like reference numerals refer to like elements.
Fig. 1 is a schematic diagram of a system which includes a navigation device and an update server according to an embodiment.
Fig. 2 is a schematic block representation of a navigation device.
Fig. 3 is a flowchart of a procedure performed by a server according to an embodiment.
Fig. 4 is a flowchart of a procedure performed by a navigation device according to an embodiment.
Fig. 5 illustrates first and second compressed database versions and Fig. 6 illustrates the associated first and second relational databases with uncompressed database pages which are used for generating a difference file.
Fig. 7 illustrates generation of a difference file in a method of an embodiment.
Fig. 8 to Fig. 10 illustrate a procedure for restoring database pages of a second relational database by a navigation device according to an embodiment.

### Detailed description of embodiments

Embodiments of the invention will be described with reference to the drawings in which like numerals refer to like elements. While embodiments will be described in specific contexts, such as vehicle navigation devices, embodiments may also be used in other contexts, such as portable navigation devices. While specific implementations and structures of relational databases are illustrated in the drawings and will be referred to below, other implementations may be used in other embodiments. For illustration, a relational database may be stored in plural files, e.g. one file which includes the header and another file which includes the database pages of the relational database. The features of embodiments may be combined with each other unless specifically stated otherwise.

Embodiments of the invention implement a page-based update procedure to update a relational database. According to general terminology in the art, a "database page" refers to the internal basic structure to organize data in one or several database file(s). Such a database page should not be confused with a hard disk page. A database page of a relational database may have a size which may be set to any one of various discrete values. When the relational database is stored in compressed format, i.e. as a compressed database version, the database pages may have different sizes. According to embodiments, a difference file is computed at a server which reads and, if required, uncompresses database pages from a second compressed database version and which performs a pattern scan to identify matching patterns in database pages which are read and, if required, uncompressed from a first compressed database version. Thereby, the difference or "delta" between the (uncompressed) database pages of first relational database and (uncompressed) database pages of second relational database may be determined. The difference file is transferred to a navigation device which stores the first compressed database version. The difference file is used to patch the first compressed database version, thereby generating the second compressed database version as a new database at the navigation device. The navigation device restores database pages of the second relational database at the page level, by sequentially reading and uncompressing database pages from the first compressed database version and patching these database pages using the difference file. The restored uncompressed database pages of the second relational database may, but do not need to be stored, but may also be directly appended to a destination database after compressing the respective restored database page of the second relational database.

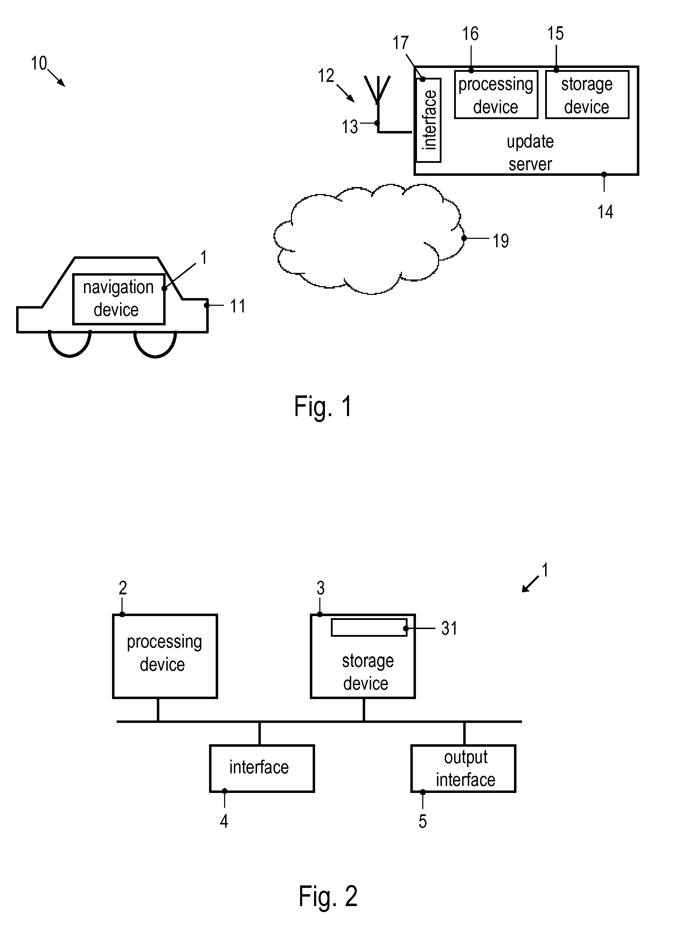

Fig. 1 is a schematic illustration of a system 10 which includes a vehicle 11, a download center 12, and a communication network 19. The vehicle 11 includes a navigation device 1. The navigation device 1 may be configured for wireless communication with the download center 12 via the communication network 19. While only one vehicle 11 is illustrated, the system 1 may include plural vehicles respectively having a navigation device, which may communicate with the download center 12. The difference file may also be transferred to the navigation device 1 using a physical storage medium. In this case, the communication network 19 is not required.

The navigation device 1 includes a database storing a first compressed database version. The first compressed database version is the old database which is to be updated to a new database. The first compressed database version may be obtained by compressing a first relational database, using the RDBMS of that database, for example. The download center 12 includes an update server 14 which generates the difference file. The update server 14 has a storage device 15 which includes all information required for computing the difference file. The storage device 15 may store the first compressed database version and the second compressed database version. The first and second compressed database versions may respectively be obtained by applying a lightweight compression to the first and second relational databases, respectively. The lightweight compression may be performed by the RDBMS of the respective database. Alternatively, the storage device 15 of the update server 14 may store at least one or both of the first and second relational databases in uncompressed format. A processing device 16 of the update server 14 may compute the difference file by reading and, if required, uncompressing database pages from the second compressed database version and by performing a pattern scan to identify differences between database pages of the different versions. The difference file may be output via an interface 17 and may be transmitted via a wireless transceiver 13, using an appropriate cellular or non-cellular wireless communication technology, such as LTE, WLAN or similar. In other implementations, the difference file may be transferred to the navigation device 1 using a storage medium as physical transfer medium.

The navigation device 1 receives the difference file. The navigation device 1 executes an update procedure which operates on the page level of the database pages. The navigation device 1 may sequentially read and uncompress database pages from the first compressed database version which is stored locally at the navigation device 1. These uncompressed database pages are database pages of the first relational database. The navigation device 1 may modify the database pages of the first relational database in accordance with instructions included in the difference file. Thereby, database pages of the second relational database are restored at the navigation device 1. The navigation device 1 may append the database pages of the second relational database, possibly after compression, to a target database. Thereby, the second compressed database version may be restored page by page at the navigation device in an iterative process. The navigation device 1 may interrupt the process of restoring database pages of the second relational database, for example when the navigation device 1 enters a low power mode. When the navigation device 1 powers up again, the restoring process may be continued with the next database page.

Fig. 2 is a schematic block diagram representation of a navigation device 1. The navigation device 1 may be installed in a vehicle and may be configured to receive the difference file which is transferred from the update server 14 in the system 10 of Fig. 1.

The navigation device 1 comprises a processing device 2 which controls the operation of the navigation device 1, e.g. according to control instructions stored in a memory. The processing device 2 may comprise a central processing unit, for example in the form of one or more microprocessors, digital signal processors or application-specific integrated circuits. The navigation device 1 further includes a storage device 3 in which a first compressed database version 31 is stored. The first compressed database version 31 may respectively be obtained by applying a lightweight compression to a first relational databases. The lightweight compression may be performed by the RDBMS of the first relational databases. The storage device 3 may comprise any one, or any combination, of various types of storage or memory media, such as random access memory, flash memory, a hard disk drive, removable memories such as a compact disk (CD), a DVD, a memory card or the like. The navigation device 1 may include an input interface 4, which may be or may include a wireless transceiver or a connector for a removeable storage medium, such as a USB memory. The processing device 2 may receive the difference file from the interface 4. The navigation device 1 includes an output interface 5 for outputting information to a user. The output interface 5 may include an optical output device, an audio output device, or a combination thereof.

The navigation device may include additional components, such as a user input interface and/or position sensor and/or a vehicle interface. The user input interface may be configured to allow a user to input textual or voice information. The position sensor may be adapted to determine the current position of the vehicle in which the navigation device 1 is installed. The position sensor may comprise a GPS (Global Positioning System) sensor, a Galileo sensor, a position sensor based on mobile telecommunication networks and the like. The vehicle interface may allow the processing device 2 to obtain information from other vehicle systems or vehicle status information via the vehicle interface. The vehicle interface may for example comprise CAN (controller area network) or MOST (Media Oriented devices Transport) interfaces.

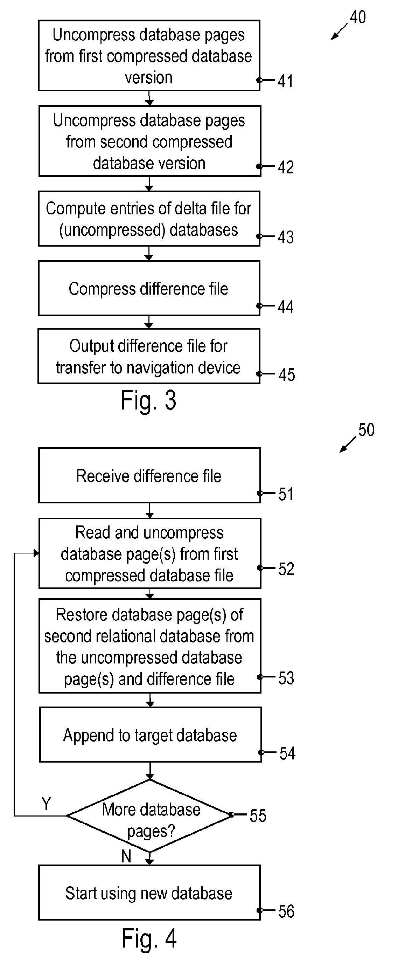

With reference to Fig. 3 to Fig. 10, methods for updating the database of the navigation device 1 from the first compressed database version 31 to the second compressed database version will be described in more detail. The methods may be performed by the update server 14 and the navigation device 1 of the system 10. The methods use a page-based procedure, in which the difference file is used to restore a database page of the second relational database from the difference file and a database page which is read and uncompressed from the first compressed database file. The difference file which is used for patching database pages defines differences in terms of the binary information of database pages of the first and second relational databases. The difference file can be used for patching the database pages at the navigation device, without requiring any information on the internal structure of the database or without having to invoke the RDBMS for executing insert, update or delete statements.

Fig. 3 is a flowchart of a procedure 40. The procedure 40 may be performed for generating the difference file in a method of embodiments. The procedure 40 may be performed by the update server 14. The procedure 40 computes a difference file which defines the differences between a second relational database and a first relational database. In the procedure 40, it is assumed that the update server 14 stores the first relational database in compressed format as first compressed database version and stores the second relational database in compressed format as second compressed database version. However, the update server may also store uncompressed relational databases, in which case uncompression steps may be omitted.

At step 41, database pages are read and uncompressed from the first compressed database version. At step 42, database pages are read and uncompressed from the second compressed database version. Reading and uncompressing may be performed sequentially for one or a few database pages at a time.

At step 43, entries of the difference file are computed. The entries of the difference file define changes in the binary information of the database pages of the (uncompressed) second relational database and the binary information of the database pages of the (uncompressed) first relational database. To compute the entries of the difference file, at least one pattern scanner may be executed. The pattern scanner may be configured to identify identical data patterns, i.e. patterns of binary information, in different database pages or within the same database page. A first pattern scanner may be executed to determine, for a bit or byte pattern in the database pages of the second relational database, whether the same or a similar bit or byte pattern is contained in database pages of the first relational databases. If the database pages store road network data for areas in which the road network has not undergone any changes, or other data which has not undergone any change, the first pattern scanner will identify a matching pattern in database pages of the first relational databases. Optionally, a second pattern scanner may be executed. The second pattern scanner may determine, for a bit or byte pattern in a database page of the second relational database, whether the same bit or byte pattern is included elsewhere in the current database page of the second relational database or is included in one of the preceding database pages of the second relational database. If the first pattern scanner or the second pattern scanner identifies a matching pattern, a reference to that pattern is written into the difference file. Only when no matching pattern is identified, the respective bit or byte pattern itself is written into the difference file. At step 44, the difference file may optionally be compressed for transferring it to the navigation device. Various compression tools, such as the binary diff (bdiff) compression tool, may be used to compress the difference file. It will be appreciated that, while the difference file may optionally be compressed for transferring it to the navigation device, the difference file itself is determined as a difference between the (uncompressed) first and second relational databases.

At step 45, the difference file may be output via an interface for transferring it to the navigation device.

The sequence of steps 41 to 44 may be repeated several times, with one or several database pages of the second relational database being respectively read at a time to compute the associated entries in the difference file.

Since the determination of the difference file is performed on page level, so as to identify differences between the binary information in files, no knowledge on the underlying structure of the first and second relational databases is required with the exception of the lengths and/or offsets of the database pages, which can be directly determined from the header of the respective database. Various modifications of the procedure 40 may be used in other embodiments. For illustration, the first and second relational databases may be stored at the update server in uncompressed format. In this case, it is not required to uncompress the read database pages.

Fig. 4 is a flowchart of a procedure 50. The procedure 50 may be performed for restoring database pages of the second compressed database version at the navigation device. The procedure 50 may be performed by the navigation device 1. The procedure 50 restores database pages of the second relational database by using the difference file to patch database pages of the first compressed database version which is initially stored in the navigation device 1. While the update procedure 50 is performed, navigation tasks may still be performed in parallel based on the first compressed database version.

At step 51, the difference file is received. When the difference file is compressed for transferring it to the navigation device, the difference file is uncompressed.

At step 52, one or several database pages are read and uncompressed from the first compressed database version which is stored in the navigation device. Reading and uncompressing may be performed sequentially for only a pre-defined number of database pages at a time, e.g., only one or only a few database pages. This ensures that the following processing operations can be completed within a short time and the procedure 50 may be interrupted when required. Further, storage space overhead required at the navigation device during the update procedure may be kept moderate because it is not required to store the full (uncompressed) first relational database.

At step 53, one or several database pages of the second relational database are restored from the difference file and the database pages which were read and uncompressed from the first compressed database version. "Restoring" here refers to a process in which the database pages of the second relational database, i.e. the new database that is already stored on the update server 12, are generated or reconstructed at the navigation device from the first, i.e. old, compressed database version and the difference file. The restoring at step 53 may comprise modifying the database pages which were read and uncompressed from the first compressed database version in a way defined by the difference file, to thereby restore database pages of the second relational database. If the difference file includes a reference to a bit or byte pattern in any database page of the first relational database, this pattern may be copied from the corresponding database page of the first relational database to the restored database page of the second relational database. If the difference file includes a reference to a bit or byte pattern in a database page of the second relational database that was previously restored or in the current database page, this pattern may be copied from the corresponding database page of the second relational database. If the difference file includes a bit or byte pattern for which the pattern scanner did not identify any matches, this pattern may be copied from the difference file to the restored database page of the second relational database.

At step 54, the restored database pages of the second relational database may be compressed and appended to a target database.

At step 55, it may be determined whether there are more database pages for which steps 52-54 are to be executed. In this case, the method returns to step 52. Otherwise, all database pages of the second relational database were restored. At this point, the target database corresponds to the second compressed database version. At step 56, the navigation device may start using this second compressed database version. The delta file and the first compressed database version may be deleted.

The page-based restoring procedure in the loop with steps 52-54 is iteratively repeated, with one or a small number of database pages being processed in each iteration. The iterations may be continued until all database pages of the first relational database have been processed and all database pages of the second relational database have been restored. As previously mentioned, navigation tasks can still be performed based on the first relational database while the procedure 50 is being carried out. The first compressed database version will not be deleted until after the procedure 50 has been completed successfully.

Since the procedure 50 is performed on page level, it can be easily interrupted when required. In order to facilitate interruption of the procedure 50, the target database is stored persistently, e.g. when the appending step 54 has been completed. Such an interruption may be triggered when the vehicle in which the navigation device is installed is parked or the navigation device is powered off for other reasons. When the navigation device starts up again, the procedure 50 is continued for the remaining database pages.

Both when generating the difference file and when using the difference file to restore database pages of the second relational database, information on the offsets of database pages stored in the headers of the first and second relational databases may be used to read and process database pages from the first and second compressed database versions.

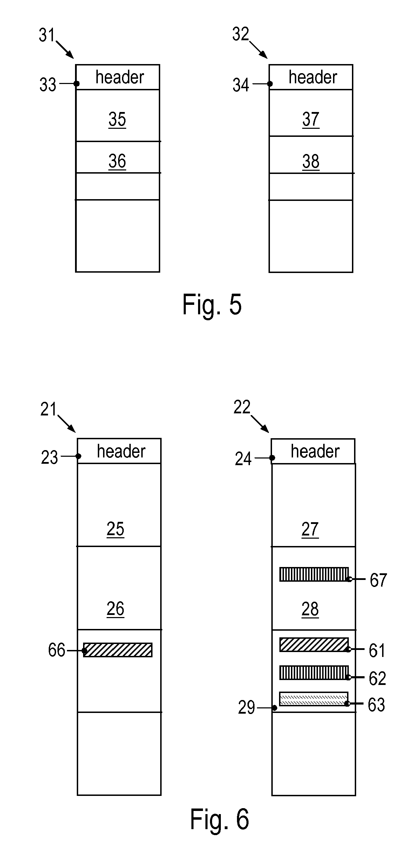

Fig. 5 schematically illustrates a first compressed database version 31 which has a header 33 and a plurality of compressed database pages 35, 36. A second compressed database version 32 has a header 34 and a plurality of compressed database pages 37, 38. The sizes of database pages may vary within the compressed database versions 31, 32 and also between the compressed database versions 31, 32. The first compressed database version 31 is initially stored in the navigation device 1. After the update procedure, the second compressed database version 32 is stored in the navigation device 1 and can be used for navigation purposes. The update server may also store the compressed database versions 31, 32. Alternatively, another compression or no compression at all may be applied to the versions of the first and second relational databases stored at the update server.

Fig. 6 schematically illustrates the first relational database 21 which has a header 23 and a plurality of database pages 25, 26. The database pages 25, 26 can be obtained by reading and uncompressing the database pages 35, 36 from the first compressed database version. The second relational database 22 has a header 24 and a plurality of database pages 27, 28, 29. The database pages 27, 28 can be obtained by reading and uncompressing the database pages 37, 38 from the second compressed database version. The first relational database 21 has a size which is greater than that of the first compressed database version 31, which corresponds to the first relational database in compressed format. The second relational database 22 has a size which is greater than that of the second compressed database version 32, which corresponds to the second relational database in compressed format. While individual database pages 25, 26 of the first relational database 21 are retrieved by reading and uncompressing database pages 35, 36 from the first compressed database version 31, it is not required that all database pages of the first relational database be simultaneously stored at the navigation device during an update procedure. The update procedure can be carried out for one database page after the other, or for small groups of database pages.

When generating the difference file, the difference file may be computed such that it indicates differences between database pages of the (uncompressed) second relational database 22 and the (uncompressed) first relational database 21. For illustration, when the database page 27 of the second relational database 22 is identical to the database page 25 of the first relational database 21, the difference file only needs to include a reference to the database page 25 of the first relational database. In the navigation device 1, the database page 27 may be restored by copying database page 25, which in turn can be obtained by reading and uncompressing database page 35 from the first compressed database version 31.

When generating the difference file, at least one pattern scanner may be executed to identify matching patterns for bit or byte patterns in a database page 29 of the second relational database 22 which is currently being processed. A first pattern scanner may be executed to identify whether a database page of the first relational database 21 includes a bit or byte pattern found in the current database page 29. When the first pattern scanner determines that a bit or byte pattern 61 has a matching pattern 66 in a database page of the first relational database 21, a reference to the matching pattern 66 may be written into the difference file. A second pattern scanner may be executed to identify whether the current database page 29 or any one of a pre-determined number of database pages of the second relational database 21 that precede the current database page 29 includes a bit or byte pattern found in the current database page 29. When the second pattern scanner determines that a bit or byte pattern 62 has a matching pattern 67 in the current database page or in any one of a pre-determined number of database pages of the second relational database 21 that precede the current database page 29, a reference to the matching pattern 67 may be written into the difference file. When both the first pattern scanner and the second pattern scanner identify a matching pattern of equal length, preference may be given to the matching pattern identified by the second pattern scanner to reduce processing times at the navigation device. When neither the first pattern scanner nor the second pattern scanner identify a matching pattern for a bit or byte pattern 63, the bit or byte pattern 63 itself may be written into the difference file. This pattern 63 is a new binary pattern in a database page which must be transferred to the navigation device in the difference file and cannot be copied from information already available at the navigation device.

When the second pattern scanner is used, a sliding search window may be defined in which the second pattern scanner looks for matching patterns. The sliding search window may include the current database page 29 and a pre-defined number of database pages of the second relational database 22 which directly precede the current database page 29. In other implementations, the second pattern scanner may be omitted and only the first pattern scanner may be used. The first pattern scanner may be configured to look for matching patterns in any database page of the first relational database 21. I.e., a random access may be performed for the first relational database 21. Alternatively, a sliding search window may also be used to define the search range of the first pattern scanner. In this case, the sliding search window of the first pattern scanner may be greater than the sliding search window of the second pattern scanner.

When the difference file is used for restoring database pages of the second relational database 22, a binary pattern may accordingly be copied into the database page 29 that is currently being restored from database pages of the first relational database (if the first pattern scanner had identified a matching pattern 66), from a previously restored database page of the second relational database (if the second pattern scanner had identified a matching pattern 67), or from the difference file.

It will be appreciated that a database may respectively be stored in a single file. Alternatively, a database may also be stored in plural files. For illustration, the header may be stored in one file and the compressed or uncompressed database pages may be stored in a separate file. In this case, the procedures described herein may be carried out for at least one file of the database, e.g. for a file which stores the database pages.

Further, a navigation device may store several separate database files. Each one of the separate database files may store database pages of a relational database. The computation of the difference file and the restoration procedure at the navigation device may then be performed for each database file. For ease of handling, when several difference files are computed by the server for separate database files, the several difference files may be combined into a single difference file for transferring it to the navigation device.

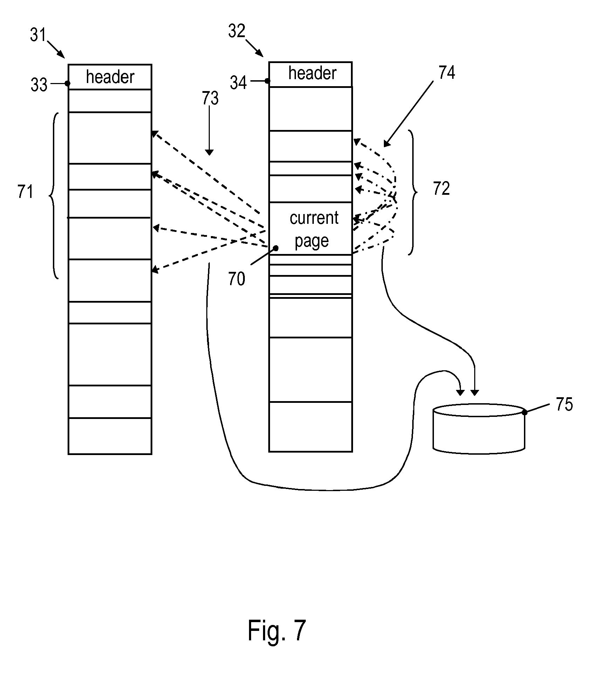

Fig. 7 illustrates the generation of the difference file according to embodiments. A database page 70 is read and uncompressed from the second compressed database version 22. The first pattern scanner identifies matching patterns in database pages of the first relational database that are located within a first sliding search window 71. References to such matching patterns, schematically indicated by arrows 73, may be stored in the difference file 75. The second pattern scanner identifies matching patterns in database pages of the second relational database that are located within a second sliding search window 72. References to such matching patterns, schematically indicated by arrows 74, may be stored in the difference file 75. The pattern matching of the first and second pattern scanner may be performed on the binary information, such that matching bit or byte patterns are identified. If neither the first pattern scanner nor the second pattern scanner identifies a matching pattern, the respective bit or byte pattern of the current page 70 may be written into the difference file 75.

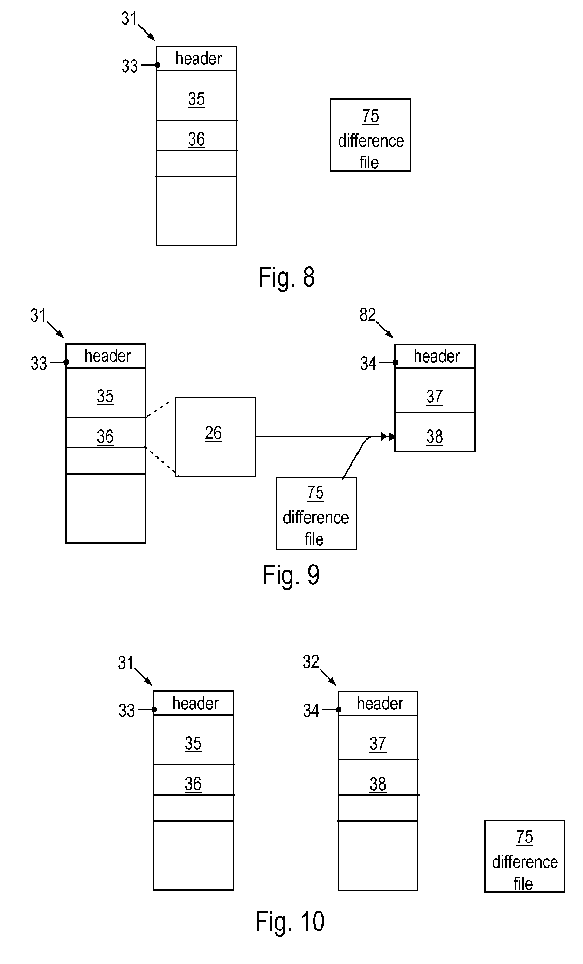

Fig. 8 to Fig. 10 illustrate the process of restoring the second relational database at the navigation device.

Fig. 8 illustrates data stored in the storage device 3 of the navigation device 1. In an initial state, the navigation device stores the first compressed database version 31. The difference file 75 is received and stored at the navigation device. If the difference file 75 has been compressed for transfer to the navigation device, it may first be uncompressed. The header 34 of the second compressed database version may be read from the difference file 75. A target database may be generated which initially includes the header 34.

Fig. 9 illustrates the page-based restoring processing. By reading and uncompressing database page 36 from the first compressed database version 31, the database page 26 of the first relational database is obtained. The database page 26 of the first relational database is modified in accordance with instructions included in the difference file 75. The difference file 75 is used for patching the database page 26 of the first relational database, so as to generate a database page of the second relational database. After compression, the database page may be appended to the target database 82. This process may be repeated for all database pages.

Fig. 10 illustrates data stored in the storage device 3 of the navigation device 1 at the end of the restoring procedure. The target database now corresponds to the second compressed database version 32. The difference file 75 and the first relational database version 31 may be deleted. Navigation tasks may be executed based on the second compressed database version 32.

While devices and methods according to embodiments have been described in detail, modifications may be implemented in other embodiments. For illustration, while a specific implementation of determining the difference file was described in detail, the difference file may also be generated using a wide variety of other techniques. For illustration, other delta encoding tools may be applied to database pages of the first and second relational databases.

For further illustration, a version of a digital map may include a plurality of different components. For illustration, there may be components naming, for points of interests, for phonemes, for routing, for basic map display, for advanced map display, for guidance bitmaps, for advanced driver assist system (ADAS) functions, for travel guide functions, or for metadata. While these components may be combined in a database file in some implementations, in other implementations the components may also be provided as separate data sets. Alternatively or additionally, different geographical update regions may be defined. In this case, the procedures described herein may be used for each one of the different components or different update regions.

Embodiments of the invention may be used for maintaining database of vehicle navigation devices.

## Claims

1. A method of updating a database of a navigation device (1), the method comprising:
computing, by a server (14), a difference file (75) which defines a difference between a second relational database (22) and a first relational database (21), the first and second relational databases (21, 22) respectively having a plurality of database pages (25-28);
receiving the difference file (75) at the navigation device (1), the navigation device (1) storing a first compressed database version (31) of the first relational database (21);
restoring, by the navigation device (1), database pages of the second relational database (22; 32) from the first compressed database version (31) and the difference file (75), wherein the restoring is performed on page level and comprises:
reading and uncompressing a database page (35, 36) from the first compressed database version (31);
modifying the uncompressed database page (25, 26) in accordance with the difference file (75) to restore a database page of the second relational database (22); and
compressing and appending the restored database page (37, 38) of the second relational database to a target database (82).

2. The method of claim 1, wherein computing the difference file (75) comprises:
sequentially reading database pages (27, 28) of the second relational database (22) and performing a pattern scan to identify repeating data patterns (61, 62).

3. The method of claim 2, wherein computing the difference file (75) comprises:
reading at least one second database page (27-29) of the second relational database (22);
reading a plurality of first database pages (25, 26) of the first relational database (21); and
executing a first pattern scanner to determine whether a data pattern (61) in the at least one second database page (29) has a matching data pattern (66) in the plurality of first database pages.

4. The method of claim 3, wherein computing the difference file (75) includes:
executing a second pattern scanner to determine whether a data pattern (62) in the at least one second database page (29) has a matching data pattern (67) in the at least one second database page (28), and
if the first pattern scanner identifies a matching data pattern (66), storing in the difference file (75) a reference to the matching data pattern (66) in the first relational database (21);
if the second pattern scanner identifies a matching data pattern (67), storing in the difference file (75) a reference to the matching data pattern (67) in the second relational database (22); and
if neither the first pattern scanner nor the second pattern scanner identifies a match, storing the data pattern in the difference file (75).

5. The method of any one of claims 2-4, further comprising:
performing, by the server (14), an uncompressing operation to retrieve database pages (25, 26) of the first relational database (21) and database pages (27, 28) of the second relational database (22),
wherein the difference file (75) is computed after the uncompressing operation.

6. The method of any one of the preceding claims, wherein modifying the uncompressed database page (25, 26) comprises the following steps performed by the navigation device (1):
determining whether the difference file (75) includes a reference to a data pattern (66) in another database page of the first relational database (21); and
selectively copying the data pattern (66) from the other database page of the first relational database (21) to the database page (29) of the second relational database (22).

7. The method of any one of the preceding claims, wherein modifying the uncompressed database page (25, 26) by the navigation device (1) comprises:
determining whether the difference file (75) includes a reference to a data pattern (67) in another database page of the second relational database (22) which was previously restored; and
selectively copying the data pattern (67) from the other database page of the second relational database (22) to the database page of the second relational database (22).

8. The method of any one of the preceding claims, wherein the restoring comprises:
persistently storing the target database (82) after the database page (38) of the second relational database (22) was appended to the target database (82);
interrupting the restoring when the navigation device (1) enters a low power mode; and
continuing the restoring when the navigation device (1) wakes up from the low power mode.

9. A navigation device, comprising:
a storage device (3) which stores a first compressed database version (31) of a first relational database (21), which comprises a plurality of database pages (25, 26);
an interface (4) configured to receive a difference file (75) which defines a difference between a second relational database (22) and the first relational database (21);
a processing device (2) coupled to the storage device (3) and the interface (4), the processing device (2) being configured to perform a restoring procedure to restore database pages (27, 28; 37, 38) of the second relational database (22) from the first compressed database version (31) and the difference file (75), the restoring procedure performed by the processing device (2) comprising:
reading and uncompressing a database page (35, 36) from the first compressed database version (31);
modifying the uncompressed database page (25, 26) in accordance with the difference file (75) to restore a database page (27, 28) of the second relational database (22); and
compress and append the restored database page (37, 38) of the second relational database (22) to a target database (82).

10. The navigation device of claim 9,
wherein the processing device (2) is configured to
determine whether the difference file (75) includes a reference to a data pattern (66) in another database page of the first relational database (21); and
selectively copy the data pattern (66) from the other database page of the first relational database (21) to the database page (29) of the second relational database (22).

11. The navigation device of claim 9 or claim 10,
wherein the processing device (2) is configured to
determine whether the difference file (75) includes a reference to a data pattern (67) in another database page of the second relational database (22) which was previously restored; and
selectively copy the data pattern (67) from the other database page of the second relational database (22) to the database page of the second relational database (22).

12. The navigation device of any one of claims 9 to 11,
wherein the processing device (2) is configured to iteratively repeat the restoring procedure for plural database pages, and to
cause the target database (82) to be persistently stored after the database page of the second relational database (22) was appended to the target database (82);
interrupt the restoring procedure when the navigation device (1) enters a low power mode; and
continue the restoring procedure when the navigation device (1) wakes up from the low power mode.

13. An update server (14), comprising:
a storage device (15) which stores a first compressed database version (31) of a first relational database (21) and a second compressed database version (32) of a second relational database (22), the first and second relational databases (21, 22) respectively having a plurality of database pages (25-28);
a processing device (16) configured to
read and uncompress database pages (35, 36) from the first compressed database version (31) to thereby obtain database pages (25, 26) of the first relational database (21),
read and uncompress database pages (37, 38) of the second compressed database version (32) to thereby obtain database pages of the second relational database (22), and
compute a difference file (75) which defines a difference between the database pages (27, 28) of the second relational database (22) and the database pages (25, 26) of the first relational database (21); and
an interface (17) to output the difference file (75) for transferring the difference file (75) to a navigation device (1).

14. The update server (14) of claim 13,
wherein the processing device (16) is configured to compute the difference file (75) by performing a procedure which comprises:
reading at least one second database page (27, 28, 29) of the second relational database (22);
reading a plurality of first database pages of the first relational database (21);
executing a first pattern scanner to determine whether a data pattern (61) in the at least one second database page (27, 28, 29) has a matching data pattern (66) in the plurality of first database pages;
executing a second pattern scanner to determine whether a data pattern (62) in the at least one second database page (27, 28, 29) has a matching data pattern (67) in the at least one second database page (27, 28, 29); and
if the first pattern scanner identifies a matching data pattern (66), storing in the difference file (75) a reference to the matching data pattern (66) in the first relational database (21);
if the second pattern scanner identifies a matching data pattern (67), storing in the difference file (75) a reference to the matching data pattern (67) in the second relational database (22); and
if neither the first pattern scanner nor the second pattern scanner identifies a match, storing the data pattern (63) in the difference file (75).

15. The update server (14) of claim 13 or claim 14,
wherein the processing device (15) is configured to compress the difference file (75) before transferring it via the interface.
